# EUROPEAN PATENT APPLICATION

(11) **EP 4 556 756 A1**
(43) Date of publication of application: **21.05.2025**
(21) Application number: 24212427.9
(22) Date of filing: 12.11.2024
(51) Int. Cl.: F16H 48/10

(54) **AN INTER-AXLE COUPLING PART**

(30) Priority: 15.11.2023 CZ 20230444
(71) Applicant: TATRA TRUCKS a.s., 742 21 Kopnvnice (CZ)
(72) Inventor: Smolka, Radomir, Pribor (CZ); Poncik, Jakub, Hovezi (CZ); Koliba, Petr, Koprivnice (CZ); Piskor, Martin, Koprivnice (CZ)
(74) Representative: Kendereski, Dusan

(57) **Abstract**

The present invention relates to an inter-axle coupling part (1) for coupling either a first front axle (3) to a second front axle (4), or a first rear axle (5) to a second rear axle (6). The inter-axle coupling part (1) is connectable to a first coupling shaft (21) leading away from an auxiliary transmission (2). The inter-axle coupling part (1) comprises a first axle differential (17) for the first front axle (3) or the second rear axle (6); an inter-axle differential (20); and a second axle differential (19) for the second front axle (4) or the first rear axle (5). The inter-axle differential (20) is connectable with the first coupling shaft (21) and connected to the first axle differential (17) and the second axle differential (19). The axle differential (20) comprises a carrier (111) for engaging a geared portion of an input shaft; a housing (103) fixedly connected to the carrier (111); and six pins with planet gears (104) mounted on the housing (103) for engaging a geared portion of a first or second output shaft. The output torques are directed to opposite sides.

## Description

### Field of technology

The present invention relates to inter-axle coupling parts with integrated inter-axle and axle differentials.

### Prior art

Embodiments of a motor vehicle chassis comprising a backbone-concept central tube are known from the prior art. A Czech utility model CZ 31942 U1 describes a segmented central tube forming a vehicle backbone chassis with independently mounted wheels and comprising connecting flanges, hollow cylindrical profile sections and a centring ring.

A Czech utility model CZ 3806 describes a motor vehicle chassis consisting of a backbone-concept central tube. The chassis consists of final drive housings, cross members and tubular parts connected to each other, wherein the axles are formed by swinging semi-axles and the drive system comprises an engine, a clutch and a basic gearbox. The backbone-concept central tube houses shafts, axle and inter-axle differentials, such as a torque divider, wherein the basic gearbox, arranged between the front and rear parts of the chassis, forms part of the backbone-concept central tube. The basic gearbox is connected by a coupling shaft to a torque multiplier which is coupled to the engine. The torque is transmitted from the engine through the connecting shaft to the basic gearbox, and from the basic gearbox through shafts (not shown) to differentials (not shown), and then to the final drive housings. Such a motor vehicle chassis embodiment has the effect of increasing efficiency of the transmission of torque transferred from the engine to the wheels of the vehicle. Further, this motor vehicle chassis embodiment achieves a reduction in the cost of manufacturing the motor vehicle chassis, and the space gained by mounting the basic gearbox directly in the central tube can be used for other purposes.

A UK patent application GB 1298871 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The individual axle differentials are connected to the respective inter-axle differential by coupling shafts, wherein a coupling shaft connecting the inter-axle differential to the axle differential of the axle closer to the centre of the chassis (i.e. the second front axle or the first rear axle) is hollow, and a coupling shaft connecting the inter-axle differential to the intermediate differential between the two axles is guided in its cavity. The construction details of the individual differentials are not shown.

A UK patent application GB 1153911 A schematically describes an arrangement of differentials in a chassis with four axles (first and second front axles and first and second rear axles), wherein two axle differentials (one for each axle) are arranged between the two front axles, or two rear axles, respectively, and an inter-axle differential therebetween. The axle differentials are connected to the respective inter-axle differential by coupling shafts. The inter-axle differential is further connected via a reduction gear and a crankshaft to an intermediate differential between the two axle pairs. The construction details of the individual differentials are not shown.

A US patent application US 2020269686 A1 schematically describes an arrangement of differentials in a chassis with four axles (first and second front axles and first and second rear axles). There is an inter-axle differential for the front axles, an inter-axle differential for the rear axles, an axle differential for the second front axle and an axle differential for the first rear axle arranged between the second front axle and the first rear axle. An axle differential for the first front axle is arranged between the first front axle and the second front axle, and an axle differential for the second rear axle is arranged between the first rear axle and the second rear axle. A disadvantage of this arrangement is the unused space between the front and rear axles, respectively, and the unnecessary space taken up by the inter-axle differentials between the second front and first rear axle.

A US patent application US 2004048713 A1 describes construction details of a different type of an inter-axle differential, comprising a three-arm spur gear carrier.

A US patent application US 2017122422 A1 describes construction details of a different type of inter-axle differential having four pairs of pinions arranged in a cylindrical housing. Torque from the input shaft is distributed between the output shaft and a gear driven by said pairs of pinions.

In the publication of Fryba, 2018, titled "Tatra 813, historie, takticko-technicka data, modifikace" (translated as "Tatra 813, history, tactical-technical data, modifications"), page 68 describes the construction of a front and rear chassis part of the Tatra 813 type, having an inter-axle differential arranged between two axle differentials in the space between the two front axles, or two rear axles, respectively. The torque vectors in the output shafts are directed in opposite directions. The axle differential itself comprises a carrier and a housing, wherein the carrier only comprises an internal spur gear for engaging a geared portion of an input shaft. Torque is transmitted from the carrier to the housing via a carrier lever connected to the housing by a fitted bolt. A disadvantage of such a bolted connection is the complexity of the fitting and a resulting unsatisfactory performance.

Construction details of other differentials are described in US patent applications US 2013047779 A1, US 2022402360 A1 and US 2022290750 A1, and in a UK patent application GB 2237851 A.

A US patent application US 2018209527 A1 describes a car chassis in a 6x6 and 4x4 all-wheel drive configuration. This chassis comprises a friction clutch at an axle differential of each axle to allow physical disengagement of a drive shaft. Tapered wheel differentials are used.

A US patent application US 2004079562 A1 describes an inter-axle differential and an axle differential, always preceded by an input, as part of a final drive housing. Both the inter-axle differential and the axle differential are designed with tapered wheels. The axle differential is part of a semi-axle.

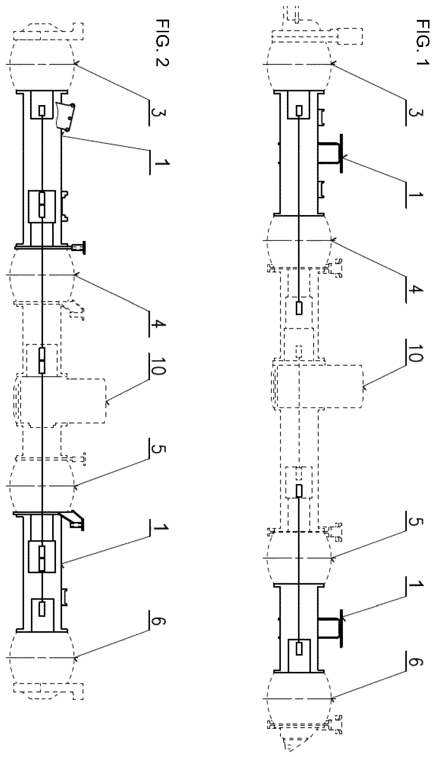

In the current TATRA 8X8 chassis driveline design (Fig. 1), the torque flowing from an auxiliary transmission (2) is directed symmetrically to rear axles (3, 4) and front axles (5, 6), and always flows from the auxiliary transmission (2) towards the axle it drives. A front and rear axle differential are arranged downstream of the auxiliary transmission (2) towards each axle between the second front and first rear axle (4, 5), and further upstream of each axle (3-6) in the direction from the auxiliary transmission, an axle differential for the respective axle (3-6) is arranged. Only one axle differential, either for the first front axle (3), or for the second rear axle (6), is arranged in an inter-axle coupling part between either the first and second front axles (3, 4) or the first and second rear axles (5, 6).

This design has a disadvantage that the wheelbases of the individual axles (3-6), and thus the entire chassis, must be sufficiently long, because there is always one axle differential in each wheelbase between the axles (3-6) and, in addition, there are inter-axle differentials in the wheelbase between the second front and first rear axle (4, 5).

Conversely, there is an unused load space in the inter-axle coupling part between the axle differential of the first front axle (3) and the second front axle (4), as well as between the first rear axle (5) and the axle differential (21) of the second rear axle (6).

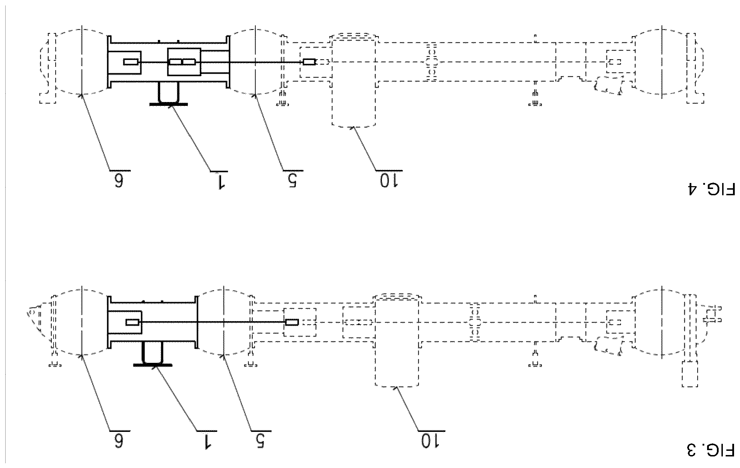

In the current TATRA 6X6 chassis driveline design having two rear axles (Fig. 3), or having two front axles (not shown, analogous to Fig. 3), the torque flowing from the auxiliary transmission (2) is directed to the front axle (3) and the rear axles (5, 6), or to the front axles and the rear axle, and always flows from the auxiliary transmission (2) towards the axle it drives. Downstream of the auxiliary transmission (2) towards each axle, in the two-rear axle embodiment, a rear axle differential is arranged between the front axle (3) and the first rear axle (5), and further upstream of each rear axle (5, 6) in the direction from the auxiliary transmission (2), an axle differential for that rear axle (5, 6) is arranged. Similarly, a front axle differential is arranged downstream of the auxiliary transmission towards each axle in the two-front axle embodiment and an axle differential of the front axle is arranged upstream of each front axle in the direction of the auxiliary transmission.

This design has a disadvantage that the wheelbases of the individual axles, and thus the whole chassis, must be sufficiently long, because there is always one axle differential in each wheelbase between the axles (1, 3, 4) and, in addition, there is an inter-axle differential in the wheelbase between the front and the first rear axle (3, 5), or between the second front and the rear axle. Conversely, there is an unused load space between the first rear axle (5) and the axle differential of the second rear axle (6), or between the axle differential of the first front axle and the second front axle.

In the prior art, there is therefore a need for an inter-axle coupling part allowing the length of the vehicle chassis with at least one axle pair to be reduced.

### Summary of the invention

It is an object of the invention to provide an inter-axle coupling part allowing a reduction in the length of the vehicle chassis having at least one axle pair.

This objective is achieved by an inter-axle coupling part for connecting either the first front axle to the second front axle, or the first rear axle to the second rear axle. The inter-axle coupling part is connectable with a first coupling shaft leading away from the auxiliary transmission. The inter-axle coupling part includes a first axle differential for the first front axle or the second rear axle; an inter-axle differential; and a second axle differential for the second front axle or the first rear axle. The inter-axle differential is connectable with the first coupling shaft and connected to the first axle differential, preferably via a second coupling shaft, and to the second axle differential, preferably without shaft connection, e. g. directly, by means of a carrier. Thus, the first axle differential relates to the axle which is arranged further away from the auxiliary transmission arranged approximately in the middle of the chassis in a full chassis view, and the second axle differential relates to the axle which is closer to the auxiliary transmission in a full chassis view.

The front inter-axle differential and the two front axle differentials are arranged between the first and second front axles, and/or the rear inter-axle differential and the two rear axle differentials are arranged between the first and second rear axles. Thus, the unused space in the inter-axle coupling part is filled by the inter-axle differential and another axle differential, allowing the entire chassis to be shortened to form a single assembly component. A further advantage is easy servicing and repair of the chassis, since in addition to the inter-axle coupling part itself, only the outermost axle (first front or second rear), and not both (front or rear) axles, need to be removed in order to repair either differential.

By arranging the front and rear inter-axle differentials and axle differentials together between the first and second front, or rear axles, respectively, and separating them spatially from the auxiliary transmission, the wheelbase between the second front and first rear axle can be shortened, resulting in a more compact chassis.

Th underlying idea of the invention is that the inter-axle differential comprises:
a. a ring-shaped carrier for engaging a geared portion of an input shaft, wherein the carrier comprises an inner circumference and an outer circumference, wherein along the inner circumference, the carrier comprises an inner spur gearing for engaging a geared portion of the input shaft, and along the outer circumference, the carrier comprises three non-geared surfaces spaced apart and three geared surfaces of an outer spur gearing for fixedly engaging a housing, the three geared surfaces being spaced apart such that a geared surface is arranged between each of the two non-geared surfaces;
b. a cylindrically-shaped housing fixedly connected to the carrier, wherein the housing comprises: a first base having an opening for the input shaft and a second output shaft; a second base having an opening for a first output shaft; and three connecting bridges linking the two bases to form three clearances between the two bases for holding pins and planet gears arranged thereon for engaging a geared portion of the two output shafts, wherein each connecting bridge comprises a geared surface on the side facing a longitudinal axis of the cylindrical shape for fixed connection with the geared surface of the outer spur gearing of the carrier; and
c. six pins mounted on the housing, wherein one planet gear is arranged on each pin for engaging the geared portion of the first or second output shaft such that one half of the number of planet gears is in engagement with the geared portion of the first output shaft and the remaining half of the number of planet gears is in engagement with the geared portion of the second output shaft extending in the opposite direction from the first output shaft.

Thus, there is no continuous outer spur gearing along the outer circumference of the carrier, but only part of the area along the outer circumference of the carrier is used for the fixed connection to the carrier housing. This allows the planet gears to be placed on the pins in the housing in the clearance not taken up by the outer spur gearing (see below) so that these planet gears can be engaged with the geared portions of both output shafts (or equivalently with the geared central wheels of both output shafts) facing away from each other along the same longitudinal axis. As a result, the two axle differentials of the front or rear axles and the inter-axle differential can be placed in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three non-geared surfaces and three geared surfaces is due to strength and fitting considerations, as a carrier with more than three non-geared surfaces and three geared surfaces would have too large a diameter to be built into the central tube of the chassis.

Preferably, each geared surface of the outer spur gearing is arranged on a radially extending arm, which provides better strength sizing of the carrier-housing pair.

The housing also does not need to have a complete cylindrical shell between the bases for a solid connection to the carrier, only the part of the shell that comes into contact with the geared surfaces of the outer spur gearing of the carrier is sufficient. This allows the planet gears to be arranged on pins in the housing in the clearance not occupied by the outer spur gearing of the carrier (see above) so that these planet gears can be in engagement with the geared portions of both output shafts (or equivalently with the geared central wheels of both output shafts) extending away from each other along the same longitudinal axis. As a result, the two axle differentials of the front or rear axles and the inter-axle differential can be arranged in the space between the front or rear axles, respectively, and thus a more compact chassis (6X6 or 8X8) can be obtained.

The three non-geared surfaces give rise to three clearances, wherein each clearance can accommodate a pair of planet gears, i.e. a total of six planet gears. The number of three connecting bridges is due to strength and fitting considerations, as a housing with more than three connecting bridges would be too large in diameter to be built into the chassis central tube.

The present invention can be applied in a segmented central tube according to the Czech utility model CZ 31942 U1. Furthermore, together with the present invention, it is possible to apply a double-arm lever pivot for both steerable axles in pre-stressed tapered roller bearings according to the Czech utility model CZ 28777 U1.

In conjunction with the present invention, it is further possible to provide a front inter-axle coupling part without a welded cross member, a rear coupling part for non-steerable axles with a welded cross member for accommodating a leaf pen bundle, or a rear coupling part for a steerable axle without a welded cross member and accommodating a double-arm lever for the steerable axle.

In the present invention, control of differential locks can be applied by means of standard pneumatic actuating cylinders, wherein an actuating pin radially moulded into a piston fits directly into an actuating fork of a differential lock sliding sleeve and performs axial movement.

### Brief description of drawings

Figure 1 shows an 8X8 chassis according to the prior art.
Figure 2 shows an 8X8 chassis according to the present invention.
Figure 3 shows a 6X6 chassis according to the prior art.
Figure 4 shows a 6X6 chassis according to the present invention.
Figure 5 shows an inter-axle coupling part for driven and steerable axles according to the prior art.
Figure 6 shows an inter-axle coupling part for driven and steerable axles according to the present invention.
Figure 7 shows an inter-axle coupling part for a driven, non-steerable axle and a driven, steerable axle according to the prior art.
Figure 8 shows an inter-axle coupling part for a driven, non-steerable axle and a driven, steerable axle according to the present invention.
Figure 9 shows an inter-axle coupling part for driven and non-steerable axles according to the prior art.
Figure 10 shows an inter-axle coupling part for driven and non-steerable axles according to the present invention.
Figure 11 shows a cross-sectional view of the axle carrier and the differential housing according to the present invention.
Figure 12 shows a longitudinal cross-section of the axle carrier and differential housing according to the present invention.
Figure 13 schematically shows an inter-axle differential according to the present invention in a side sectional view.

### Examples

### Example 1

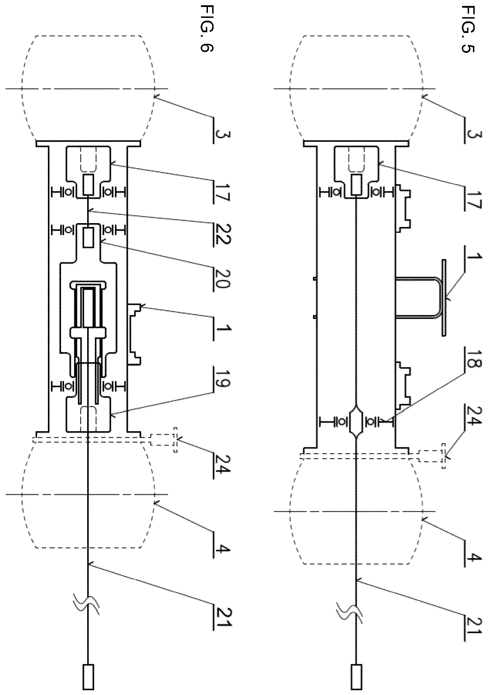

A first example embodiment is an inter-axle coupling part 1 for a front axle pair, comprising a first front axle 3 and a second front axle 4 (Fig. 6). This embodiment may be, for example, in an 8X8 chassis (Fig. 2) where both front axles 3, 4 are driven and steerable. For an analogous embodiment with a rear axle pair, the scheme would be reversed.

In the inter-axle coupling part 1 (Fig. 6) between the first front axle 3 and the second front axle 4, there is an inter-axle differential 20 connected to a first coupling shaft 21 leading away from an auxiliary transmission 2 along a final drive housing axis of the second front axle 4; a first axle differential 17 for the first front axle 3, connected to the inter-axle differential 20 via a second coupling shaft 22; and a second axle differential 19 for the second front axle 4, connected to the inter-axle differential 20 via a third coupling shaft or without a shaft (e. g. by means of a carrier). All differentials 17, 19, 20 are supported by supports 18 and of a spur gearing type.

In a reference embodiment according to the prior art (Fig. 5), only a first axle differential 17 for a first front axle 3, connected to an inter-axle differential (not shown, behind a second front axle 4) via a first coupling shaft 21, is arranged in an inter-axle coupling part 1 between the first front axle 3 and the second front axle 4 (both driven and steerable). The first coupling shaft 21 and the first axle differential 17 are supported by supports 18.

### Example 2

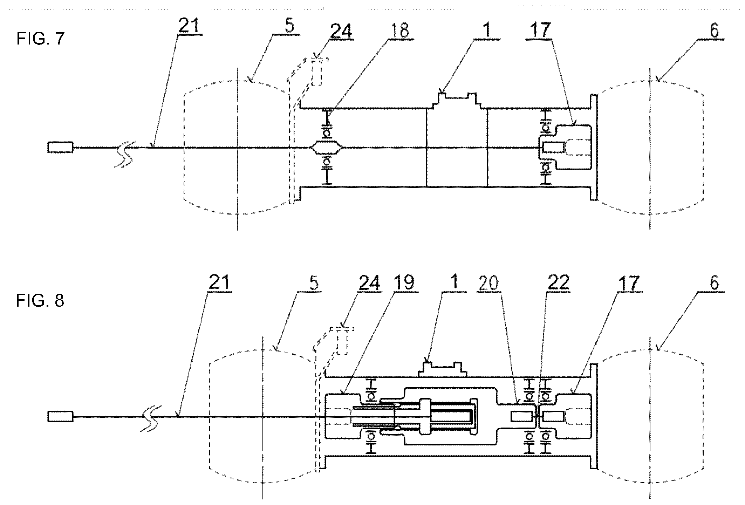

A second example embodiment is an inter-axle coupling part 1 for a rear axle pair, comprising a first rear axle 5 and a second rear axle 6 (Fig. 8). This embodiment may be, for example, in an 8X8 chassis (Fig. 2) where both rear axles 5, 6 are driven and only the second rear axle 6 is steerable. For an analogous embodiment with a front axle pair, the scheme would be reversed.

In the inter-axle coupling part 1 (Fig. 8) between the first rear axle 5 and the second rear axle 6, there is an inter-axle differential 20 connected to a first coupling shaft 21 leading away from an auxiliary transmission 2 along a final drive housing axis of the first rear axle 5; a first axle differential 17 for the second rear axle 6, connected to the inter-axle differential 20 via a second coupling shaft 22; and a second axle differential 19 for the first rear axle 5, connected to the inter-axle differential 20 via a third coupling shaft or without a shaft (e. g. by means of a carrier). All differentials 17, 19, 20 are supported by supports 18 and of a spur gearing type.

In a reference embodiment according to the prior art (Fig. 7), only a first axle differential 17 for a second rear axle 6, connected to an inter-axle differential (not shown, behind a first rear axle 5) via a first coupling shaft 21, is arranged in an inter-axle coupling part 1 between the first rear axle 5 and the second rear axle 6 (both driven and non-steerable). The first coupling shaft 21 and the first axle differential 17 are supported by supports 18.

### Example 3

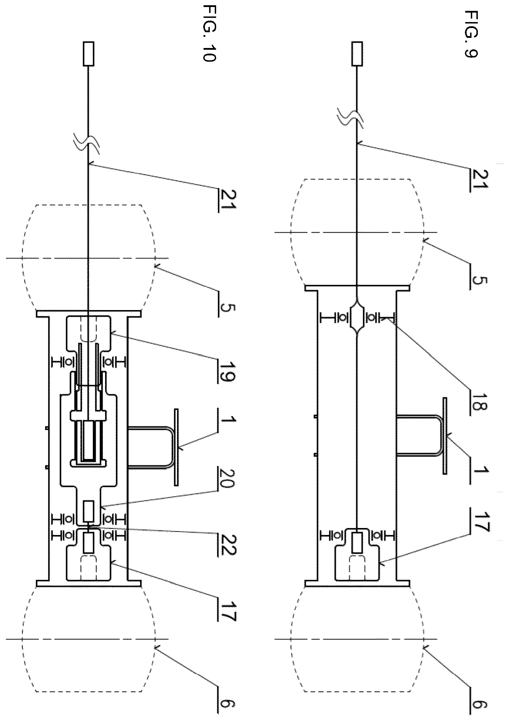

A third example embodiment is an inter-axle coupling part 1 for a rear axle pair, comprising a first rear axle 5 and a second rear axle 6 (Fig. 10). This embodiment may be, for example, in a 6X6 chassis (Fig. 4) where both rear axles 5, 6 are driven and non-steerable. For an analogous embodiment with a front axle pair, the scheme would be reversed.

In the inter-axle coupling part 1 (Fig. 10) between the first rear axle 5 and the second rear axle 6, there is an inter-axle differential 20 connected to a first coupling shaft 21 leading away from an auxiliary transmission 2 along a final drive housing axis of the first rear axle 5; a first axle differential 17 for the second rear axle 6, connected to the inter-axle differential 20 via a second coupling shaft 22; and a second axle differential 19 for the first rear axle 5, connected to the inter-axle differential 20 via a third coupling shaft or without a shaft (e. g. by means of a carrier). All differentials 17, 19, 20 are supported by supports 18 and of a spur gearing type.

In a reference embodiment according to the prior art (Fig. 9), only a first axle differential 17 for a second rear axle 6, connected to an inter-axle differential (not shown, behind a first rear axle 5) via a first coupling shaft 21, is arranged in an inter-axle coupling part 1 between the first rear axle 5 and the second rear axle 6 (both driven and non-steerable). The first coupling shaft 21 and the first axle differential 17 are supported by supports 18.

### Example 4 - Inter-axle differential

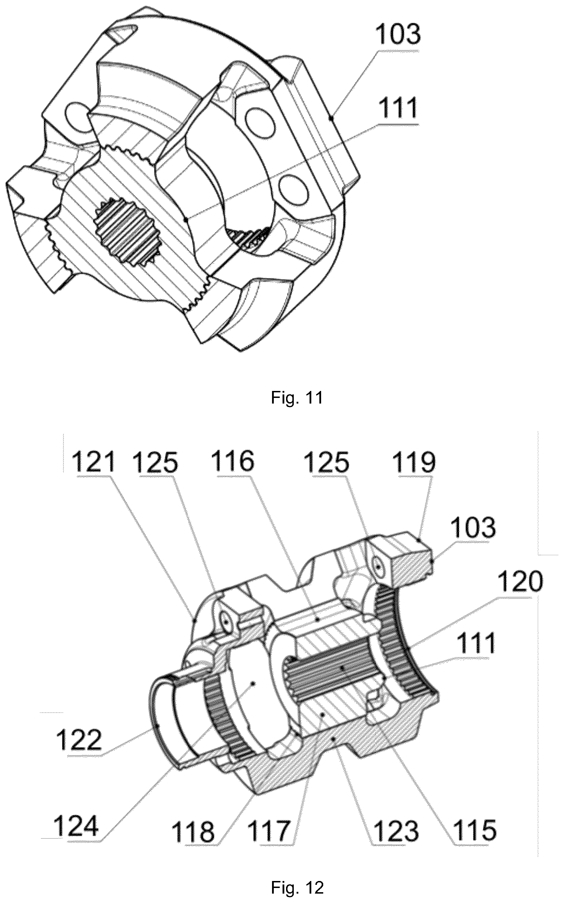

Figures 11 and 12 show a mutual arrangement of a carrier 111 and a housing 103. The carrier 111 is ring-shaped, comprises an inner circumference and an outer circumference, and along the inner circumference, it comprises an inner spur gearing 115 for engaging a geared portion of an input shaft. Along the outer circumference, it comprises three non-geared surfaces 116 spaced apart and three radially extending arms 117 with geared surfaces 118 of an outer spur gearing, for fixedly engaging the housing 103, and spaced apart such that a radially extending arm 117 with the geared surface 118 is arranged between each two non-geared surfaces 116. The housing 103 is cylindrically-shaped, and comprises a first base 119 with an opening 120 for the input shaft and a second output shaft, a second base 121 with an opening 122 for a first output shaft, and three connecting bridges 123 connecting the two bases 119, 121 to create three clearances 124 between the two bases 119, 121, for engaging pins in holes 125 in the two bases 119, 121, and planet gears 104 pivotally arranged on the pins for engaging a geared portion of the first or second output shaft. Each connecting bridge 123 comprises a geared surface on the side facing a longitudinal axis of the cylindrical shape for fixedly engaging with the geared surface 118 of the outer spur gearing of the carrier 111.

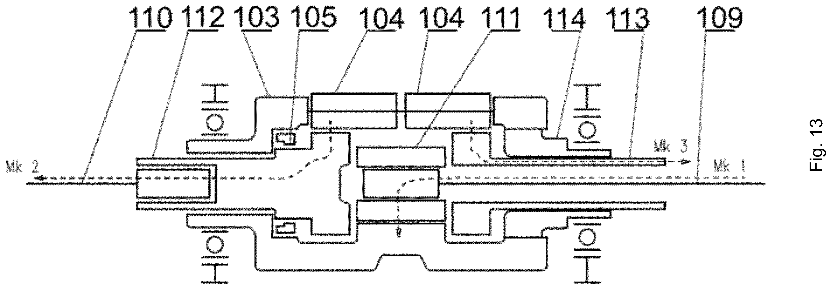

Figure 13 shows an inter-axle differential 20 distributing an input torque Mk1 from the input shaft 109 into a first output torque Mk2 directed to a first output carrier 112 of the first output shaft 110 (e. g. connected to the axle differential 17 of the first front or second rear axle) and a second output torque Mk3 directed to a second output carrier 113 of the second output shaft arranged in line with the input shaft 109 so as to surround it (e. g. connected to the axle differential 19 of the second front or first rear axle). The output torques Mk2 and Mk3 are directed to opposite sides. The input torque Mk1 is transmitted from the input shaft 109 to the carrier 111 via the geared portion of the input shaft 109 and the inner spur gearing of the carrier 111, and then to the housing 103 via the geared surfaces of the outer spur gearing of the carrier 111 and the geared surfaces of the connecting bridges of the housing 103. Thus, together with the input shaft 109, the carrier 111 and the housing 103 rotate about the axis of the input shaft, on which six pins with rotatable planet gear 104 with spur gearing (i.e., six planet gears) are mounted. The pins may be moulded into the housing 103. From the planet gears 104, which rotate as a unit together with the housing 103 and which may each rotate separately about the axis of its pin, the input torque Mk1 is split into two output torques Mk2 and Mk3 via the spur gearing of the planet gears 104 and the geared portions of the first output shaft 110 and the second output shaft, e. g. the first output carrier 112 of the first output shaft 110 and the second output carrier 113 of the second output shaft. A differential lock 105 may be arranged between the first output carrier 112 of the first output shaft 110 and the housing 103 to prevent its function, i.e., transmission of variable speed to the output shafts. The housing 103 itself may be supported by a support 114.

The inter-axle differential 20 distributes the input torque Mk1 from the input shaft to the first output torque Mk2 directed to the first output shaft (e. g. connected to the axle differential of the first front or second rear axle) and a second output torque Mk3 directed to the second output shaft arranged in line with the input shaft so as to surround it (e. g. connected to the axle differential of the second front or first rear axle). The output torques Mk2 and Mk3 are directed to opposite sides.

### Industrial applicability

The inter-axle coupling part described above can be used in vehicles requiring more compact dimensions, e.g. military vehicles, emergency services vehicles, flatbed trucks or heavy trailer tractors.

### List of reference signs

- 1: inter-axle coupling part
- 2: auxiliary transmission
- 3: first rear axle
- 4: second rear axle
- 5: auxiliary transmission
- 6: front connecting portion
- 17: first axle differential
- 18: shaft support
- 19: second axle differential
- 20: inter-axle differential
- 21: first coupling shaft
- 22: second coupling shaft
- 24: chassis cross member
- 103: inter-axle differential housing
- 104: planet gear
- 105: differential lock
- 109: input shaft
- 110: first output shaft
- 111: inter-axle differential carrier
- 112: first output carrier of the first output shaft 110
- 113: second output carrier of the second output shaft
- 114: housing support
- 115: inner spur gearing of the carrier 111
- 116: non-geared surface of the carrier 111
- 117: arm of the carrier 111
- 118: geared surface of the carrier 111
- 119: first base of the housing 103
- 120: opening of the first base 119
- 121: second base of the housing 103
- 122: opening of the second base 121
- 123: connecting bridge of the housing 103
- 124: clearance
- Mk1: input torque
- Mk2: first output torque
- Mk3: second output torque

## Claims

1. An inter-axle coupling part (1) for connecting either a first front axle (3) to a second front axle (4), or a first rear axle (5) to a second rear axle (6), wherein the inter-axle coupling part (1) is connectable to a first coupling shaft (21) leading away from an auxiliary transmission (2), wherein the inter-axle coupling part (1) comprises a first axle differential (17) for the first front axle (3) or the second rear axle (6); an inter-axle differential (20); and a second axle differential (19) for the second front axle (4) or the first rear axle (5), wherein the inter-axle differential (20) is connectable to the first coupling shaft (21) and connected to the first axle differential (17) via a second coupling shaft (22) and to the second axle differential (19) via a third coupling shaft or its carrier,
wherein for the inter-axle differential (20), an input shaft is the first coupling shaft (21), a first output shaft is the second coupling shaft (22), and a second output shaft is the third coupling shaft or its carrier,
**characterised in that** the inter-axle differential (20) comprises:
a. a ring-shaped carrier (111) for engaging a geared portion of an input shaft, wherein the carrier (111) comprises an inner circumference and an outer circumference, wherein along the inner circumference, the carrier (111) comprises an inner spur gearing (115) for engaging a geared portion of the input shaft, and along the outer circumference, the carrier (111) comprises three non-geared surfaces (116) spaced apart and three geared surfaces (118) of an outer spur gearing for fixedly engaging a housing (103), the three geared surfaces (118) being spaced apart such that a geared surface (118) is arranged between each of the two non-geared surfaces (116);
b. a cylindrically-shaped housing (103) fixedly connected to the carrier (111), wherein the housing (103) comprises: a first base (119) having an opening (120) for the input shaft and a second output shaft; a second base (121) having an opening for a first output shaft; and three connecting bridges (123) linking the two bases (119, 121) to form three clearances (124) between the two bases (119, 121) for holding pins and planet gears (104) arranged thereon for engaging a geared portion of the two output shafts, wherein each connecting bridge (123) comprises a geared surface on the side facing a longitudinal axis of the cylindrical shape for fixed connection with the geared surface (118) of the outer spur gearing of the carrier (111); and
c. six pins mounted on the housing (103), wherein one planet gear (104) is arranged on each pin for engaging the geared portion of the first or second output shaft such that one half of the number of planet gears (104) is in engagement with the geared portion of the first output shaft and the remaining half of the number of planet gears (104) is in engagement with the geared portion of the second output shaft extending in the opposite direction from the first output shaft.

2. The inter-axle coupling part (1) according to claim 1, **characterised in that** each geared surface (118) of the outer spur gearing of the carrier (111) is arranged on a radially extending arm (117).

3. The inter-axle coupling part (1) according to claim 1 or 2, **characterised in that** the first coupling shaft (21) is directed along a final drive housing axis of the second front or the first rear axle (4, 5).

4. The inter-axle coupling part (1) according to any one of claims 1 to 3, **characterised in that** the first axle differential (17) and the second axle differential (19) are of spur gearing type.
